# FASCICULE DE BREVET EUROPEEN

(11) **EP 2 953 737 B1**
(45) Date de publication et mention de la délivrance du brevet: **22.11.2017**
(21) Numéro de dépôt: 14702031.7
(22) Date de dépôt: 31.01.2014
(51) Int. Cl.: B07C 5/346

(54) **PROCÉDÉ DE TRI EN FLUX CONTINU DE MATIÈRES CONTAMINÉES ET DISPOSITIF CORRESPONDANT**
VERFAHREN ZUM SORTIEREM VOM KONTAMINIERTEN MATERIAL IN EINEM KONTINUIERLICHEN STROM UND ENTSPRECHENDE VORRICHTUNG
METHOD FOR SORTING CONTAMINATED MATERIAL IN A CONTINUOUS FLOW AND ACCORDING DEVICE

(30) Priorité: 07.02.2013 FR 1351039
(43) Date de publication de la demande: 16.12.2015
(73) Titulaire: GRS Valtech, 69120 Vaulx-en-Velin (FR); AREVA NC, 92400 Courbevoie (FR)
(72) Inventeur: HIRRIEN, Matthieu, F-69100 Villeurbanne (FR); MESSALIER,Marc, F-30200 Saint Michel d'Euzet (FR)
(74) Mandataire: Novagraaf Technologies
(86) Numéro de dépôt international: PCT/EP2014/051879
(87) Numéro de publication internationale: WO 2014/122068

(56) Documents cités:
- WO-A1-2011/082728
- FR-E- 89 029
- GB-A- 2 017 294
- GB-A- 2 022 824

## Description

La présente invention concerne le domaine du tri de matières contaminées par des radionucléides - cf. GB-A-2 022 824, FR-A-89.029 ou GB-A-2 017 294. Par souci de concision, on entend par « matières contaminées », des matières contaminées ou potentiellement contaminées, c'est-à-dire susceptibles d'être contaminées par au moins un radionucléide, éventuellement mélangées avec des matières non contaminées.

Les matières contaminées sont hétérogènes. D'une part, elles sont hétérogènes dans leur teneur en radionucléides : deux échantillons de matières contaminées peuvent avoir des teneurs en radionucléides différentes, y compris une teneur nulle pour un échantillon non contaminé. D'autre part, elles peuvent être hétérogènes dans leur nature : les matières sont par exemple des sables, sols, terres, pierres, racines, graviers, bétons, du riz, du blé, des boues et toute matière organique ou inorganique que l'on peut pelleter. Il peut donc s'agir de matières solides ou pâteuses, sans restriction particulière sur la granulométrie. De même, on ne prévoit pas de limite particulière en termes d'humidité, de siccité et de teneur en eau des matières contaminées autre que leur capacité à pouvoir être pelletées et transportées sur des convoyeurs, en particulier à bandes.

Le tri est effectué en vue d'une étape ultérieure de traitement des matières contaminées, avec des moyens techniques plus lourds et non décrits ici.

Le tri permet donc de réduire de manière importante les quantités de matière contaminée à traiter.

Plus précisément, l'invention concerne selon un premier de ses objets un procédé de tri en flux continu de matières contaminées comprenant des étapes consistant à :
- convoyer des matières contaminées d'un point d'alimentation (A) à un point de tri (B) par un premier convoyeur,
- mesurer l'activité radioactive de la matière contaminée convoyée par un premier capteur disposé entre le point d'alimentation (A) et le point de tri (B), et dont la face sensible fait face à la face supérieure (FSUP) du premier convoyeur, et
- trier les matières contaminées au point de tri (B), par un dispositif de tri.

Il est essentiellement caractérisé en ce qu'il comprend en outre des étapes consistant à :
- mesurer l'activité radioactive de la matière contaminée par un deuxième capteur :
   - Soit dont la face sensible fait face à la face supérieure (FSUP) du premier convoyeur et disposé en amont du point d'alimentation (A),
   - Soit dont la face sensible fait face à la face inférieure (FINF) du premier convoyeur,
- calculer une mesure différentielle consistant à soustraire la valeur d'une mesure du deuxième capteur de celle d'une mesure du premier capteur, et
- asservir l'étape de tri au résultat de la comparaison entre une valeur seuil et
   o la valeur de la mesure du premier capteur, ou
   o la valeur de la mesure différentielle.

Dans un mode de réalisation, on prévoit en outre une étape de comparaison de la mesure du premier capteur à la valeur seuil, l'étape de calcul de la mesure différentielle étant mise en oeuvre au moins lorsque la valeur de la mesure du premier capteur devient supérieure à la valeur seuil.

Dans un mode de réalisation, on prévoit en outre des étapes consistant à :
- définir un ensemble de positions (P) connues sur le premier convoyeur,
- associer à chaque position (P) une mesure correspondante du premier capteur, et une mesure correspondante du deuxième capteur, et
- l'étape de mesure différentielle consiste à soustraire la valeur de la mesure enregistrée par le deuxième capteur pour une position (P) donnée de la valeur de la mesure enregistrée par le premier capteur pour cette même position (P).

Dans un mode de réalisation, on prévoit en outre :
- une étape d'initialisation consistant à enregistrer dans une mémoire la valeur de la mesure de l'un au moins des capteurs, couplée à chaque position (P) du premier convoyeur à vide, et
- une étape consistant à soustraire la valeur de la mesure de l'étape d'initialisation :
   soit à la valeur de la mesure du premier capteur lorsque le premier convoyeur est en charge,
   soit à la mesure différentielle.

Dans un mode de réalisation, on prévoit en outre une étape consistant à nettoyer la bande du premier convoyeur.

Dans un mode de réalisation, le dispositif de tri peut adopter sélectivement deux positions :
- une première position lorsque la mesure par le premier capteur, ou la mesure différentielle, est supérieure à la valeur seuil ; et
- une deuxième position lorsque la mesure par le premier capteur, ou la mesure différentielle, est inférieure à la valeur seuil,
le procédé comprenant en outre au moins l'une des étapes consistant à :
- adopter la première position avec anticipation lorsque la mesure par le premier capteur, ou la mesure différentielle, devient supérieure à la valeur seuil, et
- adopter la deuxième position avec retard lorsque la mesure par le premier capteur, ou la mesure différentielle, devient inférieure à la valeur seuil.

Dans un mode de réalisation, on prévoit en outre une étape de précriblage des matières contaminées en amont de l'introduction desdites matières sur le premier convoyeur.

Selon un autre de ses objets, l'invention concerne un dispositif de tri de matières contaminées, susceptible de mettre en oeuvre le procédé selon l'invention, et comprenant :
- un premier convoyeur, sensiblement horizontal,
- des moyens mécaniques de régulation de la hauteur des matières contaminées sur le premier convoyeur,
- un premier capteur blindé au moins partiellement, et dont la face sensible fait face à la face supérieure (FSUP) du premier convoyeur,
- un deuxième capteur blindé au moins partiellement, et dont la face sensible fait face à la face inférieure (FINF) du premier convoyeur,
- un dispositif de tri gravitaire pouvant adopter sélectivement deux positions, et
- un calculateur, configuré pour asservir le positionnement du dispositif de tri au résultat de la comparaison entre une valeur seuil et
   o la valeur d'une mesure du premier capteur, ou
   o la valeur d'une mesure différentielle consistant à soustraire la valeur d'une mesure du deuxième capteur de celle d'une mesure du premier capteur.

Dans un mode de réalisation, on prévoit en outre l'un au moins des éléments suivantes :
- un deuxième convoyeur, en série avec le premier convoyeur, sur lequel la matière contaminée se déverse par gravité,
- un dispositif de stockage et d'alimentation, à partir duquel les matières contaminées peuvent être déversées par gravité au point d'alimentation (A) du premier convoyeur.

Dans un mode de réalisation, on prévoit que le deuxième convoyeur est incliné d'un angle positif par rapport au plan du premier convoyeur, pour relever les matières contaminées par rapport à la hauteur du point d'alimentation (A) et dans lequel le dispositif de tri comprend une trémie pendulaire.

Dans un mode de réalisation, on prévoit en outre au moins l'un des éléments suivantes :
- un boîtier dans lequel le premier capteur est inséré, ledit boîtier étant blindé et protégeant toutes les faces dudit premier capteur à l'exception de la surface sensible dudit premier capteur, ladite surface sensible dudit premier capteur étant protégée par un élément de protection protégeant de coups éventuels et de salissures, dans lequel si ledit élément de protection est un blindage, alors son coefficient d'atténuation est inférieur à celui du blindage des autres faces dudit premier capteur ;
- un boîtier dans lequel le deuxième capteur est inséré, ledit boîtier étant blindé et protégeant toutes les faces dudit deuxième capteur à l'exception de la surface sensible dudit deuxième capteur, ladite surface sensible dudit deuxième capteur étant protégée par un élément de protection protégeant de coups éventuels et de salissures, dans lequel si ledit élément de protection est un blindage, alors son coefficient d'atténuation est inférieur à celui du blindage des autres faces dudit deuxième capteur.

Dans un mode de réalisation, on prévoit que le premier convoyeur comprend également au moins l'un des éléments suivantes :
- un premier blindage disposé entre la face supérieure et la face inférieure dudit premier convoyeur et faisant face à la surface sensible du premier capteur, et
- un deuxième blindage disposé entre les faces supérieure et la face inférieure dudit premier convoyeur faisant face à la surface sensible du deuxième capteur.

Grâce à l'invention, le tri est simple, gravitaire et autonome en énergie. Il est flexible d'utilisation et polyvalent.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation du dispositif selon l'invention en vue latérale,
- la figure 2 illustre un mode de réalisation du dispositif selon l'invention, en vue de dessus,
- la figure 3 illustre un mode de réalisation du positionnement des capteurs selon l'invention,
- la figure 4 illustre l'angle solide de visée du premier capteur en vue partiellement éclatée du convoyeur extracteur,
- la figure 5 illustre la correspondance entre les positions P du convoyeur extracteur et P' du convoyeur suiveur,
- la figure 6 illustre, en vue de dessus du convoyeur suiveur, la distance D1' séparant la position P1' et une position de référence P'ref.

Sur les figures, les flèches pleines indiquent le sens de défilement.

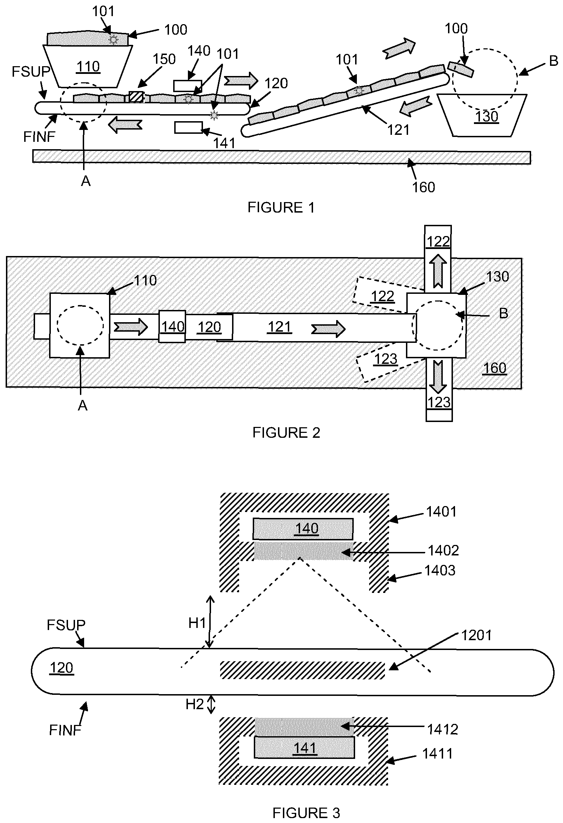

Un mode de réalisation d'un dispositif pour le tri de matières contaminées 100 est illustré en figure 1.

Les matières contaminées 100 y sont acheminées en provenance d'un ou plusieurs systèmes d'alimentation en continu, par exemple une bande transporteuse ; ou en discontinu, par exemple des engins de chantier (non représentés). Elles sont déversées dans un dispositif de stockage et d'alimentation 110.

### Dispositif de stockage et d'alimentation

Avantageusement, le dispositif de stockage et d'alimentation 110, éventuellement au moins partiellement blindé, est situé au-dessus d'un premier convoyeur 120. De préférence, le dispositif de stockage et d'alimentation 110 permet une alimentation régulière à débit sensiblement constant des matières contaminées 100 sur la face supérieure FSUP du premier convoyeur 120, et présente une capacité tampon. Pour ces raisons, on préfère une trémie, qui présente ces deux caractéristiques par sa seule forme, et peut permettre d'éviter d'avoir à mettre en oeuvre des moyens pilotés de régulation de l'alimentation en matières contaminées sur le convoyeur, par exemple sous forme de vanne commandée. Toutefois, de tels moyens pilotés ne sont pas exclus du champ de l'invention. En l'espèce, la trémie 110 comprend un dispositif d'ouverture à asservissement manuel, par exemple une vanne manuelle. En fonctionnement, la vanne manuelle est de préférence laissée ouverte dans sa position d'ouverture maximale. On peut prévoir de fermer tout ou partie de la vanne manuelle en cas de problème sur le premier convoyeur 120.

La trémie 110 alimente gravitairement le premier convoyeur 120 en matière contaminée 100.

Le débit de matières contaminées du premier convoyeur est essentiellement régulé par la vitesse dudit premier convoyeur 120, le diamètre équivalent de l'ouverture de la trémie ayant une influence sur le débit d'alimentation des matières contaminées à partir de la trémie 110 vers le convoyeur 120.

### Convoyeur

Par convention, on définit par :
- « point d'alimentation » A, l'endroit où la matière contaminée est déversée sur le convoyeur 120 ;
- « point de tri » B, l'endroit où la matière contaminée est triée par un dispositif de tri ; et
- « le convoyeur », un ensemble d'au moins un convoyeur, en particulier à bandes, permettant de transporter la matière contaminée du point d'alimentation au point de tri.

En l'espèce, entre le point d'alimentation A et le point de tri B, la matière contaminée 100 est transportée par un premier convoyeur 120, dit extracteur, de préférence sensiblement horizontal, c'est-à-dire horizontal ou légèrement incliné, c'est-à-dire d'un angle de préférence inférieur à 10° par rapport à l'horizontale, ce qui simplifie le traitement des mesures et limite les risques que la matière contaminée se déverse en amont du point d'alimentation.

A l'extrémité du premier convoyeur 120, la matière contaminée se déverse par gravité sur un deuxième convoyeur 121, dit convoyeur suiveur. En l'espèce, le deuxième convoyeur 121 est un convoyeur élévateur, c'est-à-dire qu'il est incliné d'un angle positif par rapport au plan du premier convoyeur 120 et permet de relever les matières contaminées 100 par rapport à la hauteur du point d'alimentation pour le déversement dans le dispositif de tri 130, ce qui est avantageux avec le dispositif de tri 130 utilisant la gravité décrit ci-après.

Le nombre de convoyeurs et l'angle d'inclinaison de l'éventuel deuxième convoyeur 121 peuvent dépendre par exemple de l'un au moins des éléments suivants : la longueur des convoyeurs, la typologie des matières contaminées, l'espace disponible et la configuration du terrain sur le lieu d'utilisation. Pour plus de simplicité ici, on considère uniquement un sol sensiblement horizontal. En l'espèce, le premier convoyeur 120 et le deuxième convoyeur 121 sont disposés sur le fond plat d'un conteneur de transport.

De préférence, entre le point d'alimentation A et le premier capteur 140 décrit ultérieurement, on prévoit des moyens mécaniques de régulation de la hauteur des matières contaminées 100 sur le premier convoyeur 120, en l'espèce un écrêteur mécanique 150. Un tel écrêteur a l'avantage d'être simple, robuste, nettoyé facilement et de ne pas consommer d'énergie.

### Dispositif de tri

Au point de tri B, les matières contaminées 100 sont triées automatiquement par un dispositif de tri 130 en fonction de leur teneur en radionucléides, le tri étant asservi aux mesures de leur teneur en radionucléides décrites ultérieurement.

De préférence, on prévoit un dispositif de tri 130 binaire, ce qui permet un tri très rapide. On prévoit par exemple que le dispositif de tri comprend une trémie pendulaire 130, de préférence pneumatique, qui peut prendre sélectivement deux positions. La réactivité d'une telle trémie, c'est-à-dire le temps de passage pour basculer d'une position à l'autre, peut être inférieur à une seconde, ce qui permet d'obtenir des cadences de tri très élevées.

Par souci de concision, on ne décrit ici qu'un tri binaire, en l'espèce par comparaison à un seuil. Cependant, on peut prévoir un tri ternaire, par exemple par comparaison à deux seuils sur le même principe que celui exposé ici. Plus généralement, on peut prévoir un tri multicritères à N critères par comparaison à N-1 seuils.

On peut prévoir que quand la trémie pendulaire 130 est dans une de ses positions, les matières contaminées 100 sont déversées par gravité à même le sol, dans un premier dispositif de stockage ou sur un premier convoyeur d'évacuation 122 ; et quand la trémie pendulaire 130 est dans l'autre de ses positions, les matières contaminées 100 sont déversées par gravité à même le sol, dans un deuxième dispositif de stockage ou sur un deuxième convoyeur d'évacuation 123. Par exemple les convoyeurs d'évacuation 122, 123 sont des convoyeurs à bande.

La trémie pendulaire 130 comprend un ensemble fixe et un ensemble mobile monté sur au moins un arbre. La rotation autour de l'arbre permet de basculer la partie mobile et d'orienter sélectivement la matière contaminée vers une position ou une autre (en tri binaire), c'est-à-dire en l'espèce soit vers le convoyeur d'évacuation 122 soit vers l'autre convoyeur d'évacuation 123. Le basculement est par exemple actionné par des vérins pneumatiques asservis par électrovannes. La position de la trémie pendulaire 130, donc son basculement éventuel, est déterminée par comparaison de la mesure de la teneur en radionucléides des matières contaminées 100 à une valeur seuil.

Dans un mode de réalisation, on prévoit que les deux convoyeurs d'évacuation 122, 123 sont montés à rotation, avec au moins un axe de rotation, de préférence de sorte à ce qu'ils puissent être repliés, voire positionnés parallèlement au convoyeur extracteur 120 et au convoyeur suiveur 121 pendant le transport, et déployés pendant l'utilisation.

Sur la figure 2, la position de transport est illustrée par des pointillés et la position d'utilisation par des traits pleins. En position d'utilisation, l'angle entre un convoyeur d'évacuation et le convoyeur extracteur ou suiveur peut être quelconque, supérieur ou inférieur à 90°. Cependant, de préférence, les convoyeurs d'évacuation 122, 123 sont perpendiculaires à l'axe des convoyeurs 120, 121 et tournent en sens contraire l'un de l'autre.

Dans un autre mode de réalisation, on prévoit que les deux convoyeurs d'évacuation 122, 123 sont montés amovibles par rapport à ladite structure, par un ensemble de broches, charnières, goupilles non illustrées, qui permettent également d'optimiser l'encombrement de l'ensemble des convoyeurs 120, 121, 122, 123 pendant le transport.

### Premier capteur

Entre le point d'alimentation A et le point de tri B, l'activité radioactive de la matière contaminée est mesurée par un premier capteur 140 ou détecteur, dit « capteur de mesure », par exemple un détecteur de rayons gamma.

De préférence, la face sensible du premier capteur 140 est parallèle à la bande du premier convoyeur 120 et fait face à la face supérieure FSUP de celui-ci.

La surface sensible du premier capteur 140 permet de détecter les rayonnements selon un angle solide prédéterminé, représenté très schématiquement par les pointillés figure 3.

Sans précautions particulières, le premier capteur peut mesurer non seulement l'activité de la matière contaminée présente sur le convoyeur, mais également celle de toute source radioactive à distance de rayonnement, par exemple émise par le sol en lui-même (rayonnement tellurique naturel) ou de la matière contaminée déposée au sol, ou encore de la trémie, voire le rayonnement cosmique, et ceci, quelle que soit la position de cette source radioactive par rapport à la surface sensible et l'angle solide de visée du capteur.

Pour fiabiliser les mesures et limiter le bruit de fond (comptages parasites), on prévoit avantageusement de blinder le premier capteur 140.

Dans un mode de réalisation, on prévoit de laisser la surface sensible du premier capteur 140 à l'air libre et de blinder au moins une autre face, voire toutes les autres faces du capteur.

Dans un mode de réalisation, et en référence à la figure 3, on prévoit de protéger la surface sensible du premier capteur 140 par un élément de protection 1402 et de blinder au moins une autre face, voire toutes les autres faces du capteur. Par exemple on peut prévoir une plaque, notamment en métal, par exemple un inox, pour protéger de coups éventuels et de salissures.

Dans un mode de réalisation, on prévoit que la protection 1402 est un blindage radiologique. On prévoit de blinder toutes les faces du premier capteur 140. Dans ce cas, on prévoit de préférence que le coefficient d'atténuation du blindage faisant face à la surface sensible du premier capteur 140 est inférieur à celui du blindage des autres faces de celui-ci. Par exemple, on prévoit d'insérer le premier capteur 140 dans un boîtier 1401.

Sur la figure 3, les traits hachurés du blindage 1401 représentent une épaisseur de blindage supérieure à celle des traits épais de l'élément de protection 1402 de la surface sensible. Alternativement ou en combinaison, on peut prévoir que le matériau utilisé pour le blindage faisant face à la surface sensible du premier capteur 140 soit différent du matériau utilisé pour le blindage du reste du boitier 1401. On peut prévoir que le boîtier 1401 comprend en outre des flancs 1403, facultatifs, en l'espèce perpendiculaires à la face supérieure FSUP du premier convoyeur 120, qui permettent de réduire l'angle solide du capteur 140 et de protéger de rayonnements parasites latéraux.

Quel que soit le mode de réalisation du blindage, on prévoit de préférence que seuls les rayonnements émis dans l'angle solide de visée du premier capteur 140 soient détectés par celui-ci. Ce qui permet, par exemple pour de gros volumes de matières contaminées à traiter, que les mesures ne soient pas biaisées par le bruit de fond même si les matières contaminées sont entreposées (avant comme après le tri) à proximité du premier capteur 140.

De préférence, le premier capteur 140 est choisi et disposé dans une position prédéterminée dans laquelle de préférence la totalité de la largeur du convoyeur est couverte par l'angle solide de visée de celui-ci. Par exemple pour un angle solide prédéterminé, on peut régler la hauteur H1 entre la surface supérieure du premier convoyeur 120 et la surface sensible dudit premier capteur 140. On peut prévoir de régler préalablement le premier capteur 140 à cette hauteur prédéterminée H1, ou de permettre à un opérateur de positionner le premier capteur 140 dans cette position de fonctionnement, par des moyens de fixation préalablement réglés et non illustrés. La hauteur H1 est supérieure ou égale à la hauteur à laquelle est disposé l'écrêteur mécanique 150.

Cependant, une fraction de matière contaminée peut rester agglomérée sur la bande du convoyeur 120, 121, ce qui risque de rendre les mesures du premier capteur non pertinentes.

Avantageusement, on prévoit un deuxième capteur 141.

### Deuxième capteur

De préférence, la face sensible du deuxième capteur 141 est parallèle à la bande du premier convoyeur 120 et fait face à la face inférieure FINF de celui-ci.

Par exemple le deuxième capteur 141 est identique en tout point au premier capteur 140.

De même, le deuxième capteur 141 est blindé par un blindage. Le deuxième capteur 141 peut être intégré dans un boîtier blindé 1411 de manière similaire au blindage du premier capteur 140.

On peut prévoir de protéger la surface sensible du deuxième capteur 141 par un élément de protection 1412 et de blinder au moins une autre face, voire toutes les autres faces du capteur. Par exemple on peut prévoir une plaque, notamment en métal, par exemple un inox, pour protéger de coups éventuels et de salissures.

L'élément de protection 1412 peut également être un blindage. Typiquement, dans ce cas, on prévoit que le coefficient d'atténuation du blindage de la surface sensible du deuxième capteur 141 est inférieur à celui du blindage des autres faces dudit deuxième capteur 141. On peut prévoir que le boîtier 1411 comprend en outre des flancs (non représentés), facultatifs, qui permettent de réduire l'angle solide du deuxième capteur 141 et de protéger de rayonnements parasites latéraux.

De préférence, la face sensible du deuxième capteur 141 est parallèle et fait face à la face sensible du premier capteur 140

De préférence, le deuxième capteur 141 est configuré pour mesurer exclusivement le bruit de fond et l'activité d'un éventuel résidu de matière contaminée 101 resté aggloméré sur la face inférieure FINF du premier convoyeur 120, c'est-à-dire tel que l'activité radiologique de la matière contaminée 101 mesurée par le premier capteur 140 sur la face supérieure FSUP du premier convoyeur 120 ne soit pas détectée simultanément par le deuxième capteur 141.

Le deuxième capteur 141 est disposé par rapport à la face inférieure FINF du premier convoyeur 120 dans une position prédéterminée dans laquelle de préférence la totalité de la largeur du convoyeur est couverte par l'angle solide de visée de celui-ci. Par exemple, pour un angle solide prédéterminé, on peut régler la hauteur H2 entre la surface inférieure du premier convoyeur 120 et la surface sensible dudit deuxième capteur 141. On peut prévoir de régler préalablement le deuxième capteur 141 à cette hauteur prédéterminée H2, ou de permettre à un opérateur de positionner le deuxième capteur 141 dans cette position de fonctionnement, par des moyens de fixation préalablement réglés et non illustrés.

La hauteur H2 peut être différente de la hauteur H1. L'angle solide de visée du deuxième capteur 141 peut être différent de l'angle solide de visée du premier capteur 140.

### Blindage du premier convoyeur

Il peut suffire d'une fraction, d'un résidu, de matière contaminée (de quelques micromètres de diamètre équivalent) pour émettre un rayonnement éventuellement visible par le premier capteur 140 ou le deuxième capteur 141.

De préférence, on prévoit un blindage 1201 du premier convoyeur 120, en l'espèce sous forme de plaque. Le blindage est disposé entre la face supérieure FSUP et la face inférieure FINF du premier convoyeur 120 et fait face à la surface sensible du premier capteur 140. Lorsque le premier capteur 140 et le deuxième capteur 141 se font face, comme illustré figure 3, un seul blindage commun 1201 peut être utilisé. Typiquement, si le deuxième capteur 141 est décalé par rapport au premier capteur 140, on prévoit de préférence de blinder le premier convoyeur 120 par un deuxième blindage (non illustré), en vis-à-vis du deuxième capteur 141 et disposé entre la face supérieure FSUP et la face inférieure FINF du premier convoyeur 120.

Le blindage 1201 permet de limiter la détection de l'activité radiologique de la matière contaminée 101 sur la face supérieure FSUP du premier convoyeur 120 par le deuxième capteur 141. Réciproquement, il permet de limiter la détection de l'activité radiologique d'un résidu de la matière contaminée 101 aggloméré sur la face inférieure FINF du premier convoyeur 120 par le premier capteur 140. Le blindage 1201 permet donc d'isoler chaque capteur 140, 141.

Le blindage 1201 du premier convoyeur 120 peut être interposé entre l'angle solide de visée du premier capteur 140 et entre l'angle solide de visée du deuxième capteur 141.

On peut prévoir que le premier capteur 140 et le deuxième capteur 141 soient symétriques par rapport à un plan de symétrie parallèle au convoyeur 120, en l'espèce horizontal et passant par le blindage du premier convoyeur 120, ce qui permet un moindre encombrement de n'utiliser qu'un seul blindage du convoyeur 120. Cependant, la symétrie n'est pas obligatoire. On peut prévoir que la hauteur H1 soit différente de la hauteur H2, que la forme des boitiers 1401 et 1411 soit différente ou encore que les angles de visée des capteurs 140 et 141 soit différents.

Le blindage de chaque capteur 140, 141 et du premier convoyeur 120 permet une atténuation en fonction du débit de dose naturelle (cosmique et tellurique) et artificielle (matière contaminée). Autrement dit, le bruit de fond naturel par rayonnements cosmiques ou telluriques est intégré dans les mesures. La détection d'une activité radiologique par le deuxième capteur 141 correspond à une pollution de la face inférieure FINF de la bande du premier convoyeur 120 par un résidu de matière contaminée 101 ou à une anomalie.

Par exemple, on peut prévoir comme blindage de chaque capteur 140, 141 et du premier convoyeur 120 un ensemble de plaques de matériau dense (acier, plomb, tungstène...). La nature ou l'épaisseur du matériau peut être choisie par exemple en fonction du niveau d'activité radiologique ambiante ou mesurée, ou d'un coefficient d'atténuation déterminé. Par exemple, on peut prévoir des plaques d'acier de 5 cm d'épaisseur.

Ainsi, le ou les blindages permettent de réduire les rayonnements liés au contexte de mise en oeuvre (rayonnement cosmique, tellurique, ou de matières contaminées avoisinantes), qui risquent de créer un bruit de fond statique mais éventuellement variable dans le temps, en particulier si un stock de matières contaminées est approvisionné à proximité.

### Nettoyage de bande

On peut prévoir de nettoyer la bande du premier convoyeur 120, y compris en continu.

On peut prévoir des moyens de lavage à l'eau même s'ils sont assez complexes à mettre en oeuvre.

On peut prévoir de racler mécaniquement la bande du premier convoyeur 120, ce qui minimise le risque de présence de résidus de matière contaminée sur la face inférieure FINF et limite l'accumulation de la matière sur celle-ci. A cet effet, on prévoit des moyens connus de raclage de bande, par exemple une plaque suspendue en appui sur des ressorts.

### Fonctionnement

Les capteurs 140, 141 sont connus de l'homme du métier.

On prévoit de préférence un fonctionnement en flux continu, ce qui permet de trier de gros volumes de matière contaminée.

En fonctionnement, la matière contaminée 100 est extraite de la trémie d'alimentation 110 par le premier convoyeur 120, sur sa face supérieure. Elle passe sous l'écrêteur 150 puis dans l'angle solide de visée du premier capteur 140 où l'activité radiologique est mesurée. Le pas en temps des mesures d'activité radiologique est de préférence inférieur à une seconde et supérieur ou égal à 0.1 seconde.

La matière contaminée 100 est ensuite déversée du premier convoyeur 120 sur la face supérieure du deuxième convoyeur 121. Le deuxième convoyeur 121 est incliné et permet de convoyer la matière contaminée 100 à une hauteur supérieure à celle du point d'alimentation A, ladite hauteur étant déterminée en fonction de divers facteurs, et en particulier étant de préférence à hauteur d'homme, ce qui facilite le montage/démontage, le nettoyage et le maintien, par exemple de 1 à 1.5 m par rapport au sol. La matière contaminée 100 est ensuite déversée par gravité dans un dispositif de tri, en l'espèce une trémie pendulaire 130, qui peut basculer sélectivement entre deux positions.

Les vitesses de défilement du premier convoyeur 120 et du deuxième convoyeur 121 peuvent dépendre de leur largeur. Par exemple, la largeur du premier convoyeur 120 et du deuxième convoyeur 121 est sensiblement la même, de l'ordre de 1 mètre.

De préférence, le rapport des vitesses de défilement du premier convoyeur 120 et du deuxième convoyeur 121 est constant dans le temps. La vitesse de défilement d'un convoyeur dépend de préférence de sa largeur. A titre purement illustratif, la vitesse de défilement du premier convoyeur 120 peut être comprise entre 0.1 et 1 m/s.

### Asservissement

Au point de tri B, comme exposé précédemment, en fonction de la position de la trémie pendulaire 130, la matière contaminée 100 est déversée en sortie de celle-ci, soit sur un premier convoyeur d'évacuation 122, soit sur un deuxième convoyeur d'évacuation 123. Par exemple, on prévoit que le premier convoyeur d'évacuation 122 est utilisé pour extraire des matières dont l'activité radiologique est inférieure à la valeur seuil, et que le deuxième convoyeur d'évacuation 123 est utilisé pour extraire des matières dont l'activité radiologique est supérieure à la valeur seuil.

On prévoit que la position de la trémie pendulaire 130, c'est-à-dire son mouvement de bascule, est asservie au moins à la mesure du premier capteur 140.

Typiquement, la valeur de la mesure du premier capteur 140 est comparée à une valeur seuil enregistrée dans une mémoire et de préférence paramétrable. En fonction du résultat de la comparaison, la trémie pendulaire 130 est orientée sélectivement, en l'espèce par basculement, dans une position si le résultat de la comparaison est positif, et orientée dans une autre position, en l'espèce dans l'autre position, si le résultat de la comparaison est négatif. La valeur seuil est aussi appelée consigne de tri.

Si une fraction ou un résidu de matière contaminée ionisante 101 reste collée à la bande transporteuse du premier convoyeur 120, son rayonnement risque d'être mesuré par le premier capteur 140 à chaque passage, donc de rendre ses mesures non pertinentes.

C'est la raison pour laquelle on peut prévoir une mesure différentielle consistant à soustraire la valeur d'une mesure du deuxième capteur 141 de celle d'une mesure du premier capteur 140. Ainsi, la position de la trémie pendulaire 130, c'est-à-dire son mouvement de bascule, peut être asservie en outre à la mesure du deuxième capteur 141, en l'espèce au travers de cette mesure différentielle.

### Mesure différentielle

En fonction de la position du deuxième capteur 141 et de l'environnement, le deuxième capteur 141 peut mesurer sensiblement le même bruit de fond, lié aux mêmes sources que celles du premier capteur. En pratique, ce n'est pas toujours le cas.

On peut prévoir que la mesure différentielle entre le premier capteur 140 et le deuxième capteur 141 n'est mise en oeuvre que si la mesure du premier capteur 140 devient supérieure à la valeur seuil.

De préférence, on prévoit que la mesure différentielle est effectuée de la manière suivante :
Le premier capteur 140 et le deuxième capteur 141 effectuent chacun des mesures, de préférence en continu.

Sur le premier convoyeur 120, on définit un ensemble de positions P connues, par exemple grâce à un codeur, en l'espèce une roue codeuse.

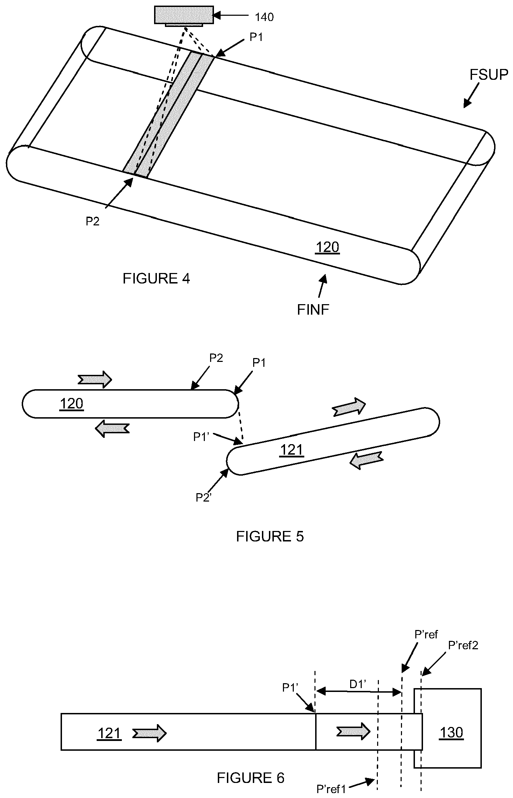

Sur la figure 4, seules deux positions successives P1 et P2 sont illustrées, la distance séparant une première position P1 et une deuxième position P2 sur le premier convoyeur 120 correspondant de préférence au pas de mesure du premier capteur 140 dans le sens de défilement. A titre illustratif, le pas de mesure en distance peut être de l'ordre de quelques centimètres.

La face supérieure FSUP du premier convoyeur 120 comprend de la matière 100 dont l'activité est mesurée par le premier capteur 140 et enregistrée dans une mémoire couplée à un calculateur. On associe alors la position P correspondant à cette mesure de sorte à créer un premier couple valeur de la mesure du premier capteur 140 / position P dans une mémoire.

En fonctionnement, la matière contaminée défile sur le premier convoyeur 120, puis est déversée sur le deuxième convoyeur 121. Les positions P (P1 puis P2) passent alors sur la face inférieure FINF du premier convoyeur 120.

De manière similaire, le deuxième capteur 141 mesure et enregistre dans une mémoire couplée au calculateur l'activité de l'éventuelle matière 101 résiduelle sur la face inférieure FINF du premier convoyeur 120.

On associe alors la position P correspondante à cette mesure de sorte à créer un deuxième couple valeur de la mesure du deuxième capteur 141 / position P dans une mémoire.

Le pas de mesure en distance du deuxième capteur 141 peut être différent de celui du premier capteur 140.

On connaît alors la valeur de la mesure du premier capteur 140 et celle du deuxième capteur 141 pour une même position P donnée. La mesure différentielle peut alors être effectuée. A cet effet, à partir du premier et du deuxième couple de valeurs, la mesure de l'activité radiologique pour une position P donnée par le deuxième capteur 141 enregistrée dans une mémoire couplée au calculateur est soustraite de la mesure enregistrée effectuée par le premier capteur 140 pour la même position P.

A titre d'exemple, si la mesure effectuée par le premier capteur 140 est supérieure à la valeur seuil mais que la mesure différentielle est inférieure à la valeur seuil, alors cela signifie d'une part que des résidus sont probablement restés collés au premier convoyeur 120, et d'autre part que le volume de matières contaminées correspondant arrivant à la trémie comprend en fait des matières dont l'activité est inférieure à la valeur seuil. En conséquence, la trémie pendulaire 130 est basculée vers le convoyeur d'évacuation correspondant, en l'espèce le premier convoyeur d'évacuation 122. Si la trémie pendulaire 130 était déjà dans cette position, elle y est maintenue.

Sur le deuxième convoyeur 121, de manière similaire, on définit un ensemble de positions P' connues, par exemple grâce à un codeur, en l'espèce une roue codeuse. Il existe une correspondance entre une position P donnée sur le premier convoyeur 120 et une position P' correspondante sur le deuxième convoyeur 121. Par exemple, figure 5, la matière en position P1 sur le premier convoyeur 120 est déversée en position P1' sur le deuxième convoyeur 121, et de même pour P2 et P2'.

Comme les positions P' sont connues, on peut asservir la position de la trémie pendulaire 130 à la distance D1' séparant ladite position P1' d'une position de référence P'ref, correspondant par exemple à l'extrémité du deuxième convoyeur, c'est-à-dire correspondant à la position de la trémie pendulaire 130 au point de tri B ou un point en amont. Par exemple, si la trémie pendulaire 130 est basculée vers le premier convoyeur d'évacuation 122 mais que la mesure, éventuellement différentielle, implique qu'elle doive être basculée vers le deuxième convoyeur d'évacuation 123, on prévoit que la trémie pendulaire 130 est basculée dès que la position P1' atteint la position de référence P'ref.

De préférence, on prévoit une approche majorante, voir figure 6, permettant de limiter les risques de contamination. A cet effet :
- lorsque la mesure, éventuellement différentielle, devient supérieure à la valeur seuil, on peut prévoir que la trémie pendulaire 130 est basculée avec anticipation, c'est-à-dire dès que la position P1' atteint une position de référence P' ref1 en amont de P'ref ;
- lorsque la mesure, éventuellement différentielle, devient inférieure à la valeur seuil, on peut prévoir que la trémie pendulaire 130 est basculée avec retard, c'est-à-dire dès que la position P1' atteint une position de référence P'ref2 en aval de P'ref.

Ainsi, il est possible que de la matière non contaminée soit triée et considérée comme contaminée mais pas l'inverse.

Comme décrit ci avant, on préfère asservir la position de la trémie pendulaire 130 en fonction des positions P, P'.

Alternativement, comme la longueur et la vitesse de défilement du deuxième convoyeur 121 sont également connues, on peut calculer, grâce au calculateur, le moment auquel la position P1' est à l'extrémité aval (côté trémie pendulaire 130) du deuxième convoyeur 121 et asservir la position de la trémie pendulaire 130 en fonction du temps.

Le calculateur est un moyen d'asservissement du positionnement du dispositif de tri 130 en fonction des données issues des capteurs 140 et 141. Le calculateur peut être tout type d'outil informatique programmable, un processeur, un microprocesseur, une unité centrale, etc.

L'avantage d'un asservissement en fonction de la position plutôt qu'en fonction du temps réside par exemple dans le fait que si les convoyeurs 120, 121 doivent être arrêtés, la position reste connue, donc seul le temps d'arrivée de la matière contaminée à la trémie pendulaire 130 change.

Par ailleurs, comme les positions P sur le premier convoyeur 120 sont connues, que la largeur du convoyeur 120 est connue, que la matière contaminée couvre sensiblement toute cette largeur et que sa hauteur est connue et sensiblement égale à la hauteur de l'écrêteur mécanique 150, on peut calculer le volume d'un échantillon de matière contaminée passant sous le premier capteur 140. Ce volume d'échantillon peut en outre être choisi, par exemple en faisant varier la hauteur de l'écrêteur mécanique 150 ou la valeur de l'angle solide du premier capteur 140. Il en est de même pour le deuxième capteur 141.

### Alimentation en énergie

De préférence, on prévoit un groupe électrogène permettant d'alimenter en énergie électrique tout ou partie de l'ensemble des convoyeurs 120, 121, 122, 123, des capteurs 140, 141 et du calculateur, et un compresseur permettant d'alimenter la trémie pendulaire 130 en air comprimé. On peut prévoir également des armoires de puissance de régulation et de commande électrique.

### Autonomie

Le système de tri comprenant la trémie d'alimentation 110 le premier convoyeur 120, positionné par rapport à la trémie d'alimentation 110, le deuxième convoyeur 121, la trémie pendulaire 130 et le premier convoyeur d'évacuation 122 et le deuxième convoyeur d'évacuation 123 en position de transport, est avantageusement configuré pour être mobile et transportable dans un conteneur de transport (typiquement de 40 pieds). En fonction du volume de celui-ci, le groupe électrogène peut être transporté dans un deuxième conteneur de transport.

Grâce au groupe électrogène, le système de tri peut être déployé en tout lieu, indépendamment de l'accessibilité d'une prise secteur.

En fonctionnement, le système de tri peut être déployé à même le fond du conteneur de transport.

Avantageusement, le système de tri peut être déployé en quelques heures seulement.

On peut prévoir une étape de précriblage des matières contaminées en amont de l'introduction desdites matières sur le premier convoyeur 120, ce qui peut améliorer encore l'efficacité du tri, par exemple par une étape de filtrage mécanique (typiquement par bareaudage ou dégrillage) à l'entrée de la trémie d'alimentation. En l'espèce, on prévoit une grille inclinée sur la partie supérieure de la trémie d'alimentation.

Grâce à l'invention, il est possible de trier plus de 100 tonnes de matières contaminées par heure.

### Initialisation

On peut prévoir une étape d'initialisation ou de calibration, dans laquelle au moins le premier convoyeur est à vide.

Dans un mode de réalisation, on prévoit d'enregistrer dans une mémoire la valeur de la mesure de l'un au moins des capteurs 140, 141, le premier convoyeur 120 - non chargé en matière 100 - pouvant être en fonctionnement ou à l'arrêt. S'il est en fonctionnement, on prévoit de préférence d'effectuer les mesures sur au moins une rotation complète de la bande de celui-ci.

Dans ce mode de réalisation, il n'est pas nécessaire de coupler les mesures aux positions P. On peut ainsi mesurer le rayonnement ambiant, typiquement tellurique et cosmique.

Dans un autre mode de réalisation, on prévoit d'enregistrer dans une mémoire la valeur de la mesure de l'un au moins des capteurs 140, 141, couplée à chaque position P du premier convoyeur 120 à vide. On peut ainsi mesurer en outre le rayonnement d'éventuels résidus 101 sur le premier convoyeur 120.

On peut prévoir de soustraire la valeur de la mesure de l'un quelconque des deux modes de réalisation de l'étape d'initialisation à la valeur de la mesure du premier capteur lorsque le premier convoyeur 120 est en charge, ou à la mesure différentielle telle que présentée précédemment.

L'étape d'initialisation peut être préalable, par exemple lors d'une première mise en oeuvre, avant que la matière 100 soit extraite par le premier convoyeur 120. Si le premier convoyeur a déjà convoyé des matières contaminées, on prévoit de le vider, voire de laver celui-ci.

Grâce à l'étape d'initialisation, le bruit de fond global peut ainsi être intégré dans les mesures lorsque le premier convoyeur est en charge. Si des matières contaminées sont stockées à distance de rayonnement du premier convoyeur et régulièrement approvisionnées, on prévoit de préférence de mettre en oeuvre une étape d'initialisation à chaque approvisionnement, ce qui permet de prendre en compte les évolutions du bruit de fond dans le temps.

## Revendications

1. Procédé de tri en flux continu de matières contaminées (100) comprenant des étapes consistant à :
- convoyer des matières contaminées (100) d'un point d'alimentation (A) à un point de tri (B) par un premier convoyeur (120),
- mesurer l'activité radioactive de la matière contaminée convoyée par un premier capteur (140) disposé entre le point d'alimentation (A) et le point de tri (B), et dont la face sensible fait face à la face supérieure (FSUP) du premier convoyeur (120), et
- trier les matières contaminées (100) au point de tri (B), par un dispositif de tri (130),
**caractérisé en ce qu'**il comprend en outre des étapes consistant à :
- mesurer l'activité radioactive de la matière contaminée par un deuxième capteur (141) :
- Soit dont la face sensible fait face à la face supérieure (FSUP) du premier convoyeur (120) et disposé en amont du point d'alimentation (A),
- Soit dont la face sensible fait face à la face inférieure (FINF) du premier convoyeur (120),
- calculer une mesure différentielle consistant à soustraire la valeur d'une mesure du deuxième capteur (141) de celle d'une mesure du premier capteur (140), et
- asservir l'étape de tri au résultat de la comparaison entre une valeur seuil et
∘ la valeur de la mesure du premier capteur (140), ou
∘ la valeur de la mesure différentielle.

2. Procédé selon la revendication 1, comprenant en outre une étape de comparaison de la mesure du premier capteur (140) à la valeur seuil, l'étape de calcul de la mesure différentielle étant mise en oeuvre au moins lorsque la valeur de la mesure du premier capteur (140) devient supérieure à la valeur seuil.

3. Procédé selon l'une quelconque des revendications précédentes, comprenant en outre des étapes consistant à :
- définir un ensemble de positions (P) connues sur le premier convoyeur (120),
- associer à chaque position (P) une mesure correspondante du premier capteur (140), et une mesure correspondante du deuxième capteur (141), et dans lequel
- l'étape de mesure différentielle consiste à soustraire la valeur de la mesure enregistrée par le deuxième capteur (141) pour une position (P) donnée de la valeur de la mesure enregistrée par le premier capteur (140) pour cette même position (P).

4. Procédé selon l'une quelconque des revendications précédentes, comprenant en outre
- une étape d'initialisation consistant à enregistrer dans une mémoire la valeur de la mesure de l'un au moins des capteurs (140, 141), couplée à chaque position (P) du premier convoyeur (120) à vide, et
- une étape consistant à soustraire la valeur de la mesure de l'étape d'initialisation :
∘ soit à la valeur de la mesure du premier capteur (140) lorsque le premier convoyeur (120) est en charge,
∘ soit à la mesure différentielle.

5. Procédé selon l'une quelconque des revendications précédentes, comprenant en outre une étape consistant à nettoyer la bande du premier convoyeur (120).

6. Procédé selon l'une quelconque des revendications précédentes, dans lequel le dispositif de tri (130) peut adopter sélectivement deux positions :
- une première position lorsque la mesure par le premier capteur (140), ou la mesure différentielle, est supérieure à la valeur seuil ; et
- une deuxième position lorsque la mesure par le premier capteur (140), ou la mesure différentielle, est inférieure à la valeur seuil,
le procédé comprenant en outre au moins l'une des étapes consistant à :
- adopter la première position avec anticipation lorsque la mesure par le premier capteur (140), ou la mesure différentielle, devient supérieure à la valeur seuil, et
- adopter la deuxième position avec retard lorsque la mesure par le premier capteur (140), ou la mesure différentielle, devient inférieure à la valeur seuil.

7. Procédé selon l'une quelconque des revendications précédentes, comprenant en outre une étape de précriblage des matières contaminées (100) en amont de l'introduction desdites matières sur le premier convoyeur (120).

8. Dispositif de tri de matières contaminées (100), susceptible de mettre en oeuvre le procédé selon l'une quelconque des revendications précédentes, et comprenant :
- un premier convoyeur (120), sensiblement horizontal,
- des moyens (150) mécaniques de régulation de la hauteur des matières contaminées (100) sur le premier convoyeur (120),
- un premier capteur (140) blindé au moins partiellement, et dont la face sensible fait face à la face supérieure (FSUP) du premier convoyeur (120),
- un deuxième capteur (141) blindé au moins partiellement, et dont la face sensible fait face à la face inférieure (FINF) du premier convoyeur (120),
- un dispositif de tri (130) gravitaire pouvant adopter sélectivement au moins deux positions, et
- un calculateur, configuré pour asservir le positionnement du dispositif de tri (130) au résultat de la comparaison entre une valeur seuil et
∘ la valeur d'une mesure du premier capteur (140), ou
∘ la valeur d'une mesure différentielle consistant à soustraire la valeur d'une mesure du deuxième capteur (141) de celle d'une mesure du premier capteur (140).

9. Dispositif selon la revendication 8, comprenant en outre l'un au moins des éléments suivantes :
- un deuxième convoyeur (121), en série avec le premier convoyeur (120), sur lequel la matière contaminée se déverse par gravité,
- un dispositif de stockage et d'alimentation (110), à partir duquel les matières contaminées (100) peuvent être déversées par gravité au point d'alimentation (A) du premier convoyeur (120).

10. Dispositif selon l'une quelconque des revendications 8 ou 9, dans lequel le deuxième convoyeur (121) est incliné d'un angle positif par rapport au plan du premier convoyeur (120), pour relever les matières contaminées (100) par rapport à la hauteur du point d'alimentation (A) et dans lequel le dispositif de tri (130) comprend une trémie pendulaire.

11. Dispositif de tri de matières contaminées (100), selon l'une quelconque des revendications 8 à 10, **caractérisé en ce qu'**il comprend en outre au moins l'un des éléments suivantes :
- un boîtier (1401) dans lequel le premier capteur (140) est inséré, ledit boîtier (1401) étant blindé et protégeant toutes les faces dudit premier capteur (140) à l'exception de la surface sensible dudit premier capteur (140), ladite surface sensible dudit premier capteur (140) étant protégée par un élément de protection (1402) protégeant de coups éventuels et de salissures, dans lequel si ledit élément de protection (1402) est un blindage, alors son coefficient d'atténuation est inférieur à celui du blindage des autres faces dudit premier capteur (140) ;
- un boîtier (1411) dans lequel le deuxième capteur (141) est inséré, ledit boîtier (1411) étant blindé et protégeant toutes les faces dudit deuxième capteur (141) à l'exception de la surface sensible dudit deuxième capteur (141), ladite surface sensible dudit deuxième capteur (141) étant protégée par un élément de protection (1412) protégeant de coups éventuels et de salissures, dans lequel si ledit élément de protection (1412) est un blindage, alors son coefficient d'atténuation est inférieur à celui du blindage des autres faces dudit deuxième capteur (141).

12. Dispositif de tri de matières contaminées (100), selon l'une quelconque des revendications 8 à 11, **caractérisé en ce que** le premier convoyeur (120) comprend également au moins l'un des éléments suivantes :
- un premier blindage (1201) disposé entre la face supérieure (FSUP) et la face inférieure (FINF) dudit premier convoyeur (120) et faisant face à la surface sensible du premier capteur (140), et
- un deuxième blindage disposé entre les faces supérieure (FSUP) et la face inférieure (FINF) dudit premier convoyeur (120) faisant face à la surface sensible du deuxième capteur (141).

## Patentansprüche

1. Verfahren zum Sortieren von kontaminierten Materialien (100) in einem kontinuierlichen Strom, umfassend Schritte zum:
- Transportieren von verunreinigten Materialien (100) von einem Beschickungspunkt (A) zu einem Sortierpunkt (B) durch eine erste Förderanlage (120),
- Messen der Radioaktivität des transportierten kontaminierten Materials durch einen zwischen dem Beschickungspunkt (A) und dem Sortierpunkt (B) angeordneten Sensor (140), dessen empfindliche Seite zur Oberseite (FSUP) der ersten Förderanlage (120) zeigt, und
- Sortieren der kontaminierten Materialien (100) am Sortierpunkt (B) durch eine Sortiervorrichtung (130), **dadurch gekennzeichnet, dass** es ferner Schritte umfasst zum:
- Messen der Radioaktivität des kontaminierten Materials durch einen zweiten Sensor (141):
- dessen empfindliche Seite zur Oberseite (FSUP) der ersten Förderanlage (120) zeigt und stromaufwärts vom Beschickungspunkt (A) angeordnet ist, oder
- dessen empfindliche Seite zur Unterseite (FINF) der ersten Förderanlage (120) zeigt,
- Berechnen eines Differenzmaßes umfassend das Subtrahieren des Werts einer Messung des zweiten Sensors (141) von dem einer Messung des ersten Sensors (140), und
- Regeln des Sortierschritts gemäß dem Ergebnis des Vergleichs zwischen einem Schwellenwert und
∘ dem Wert der Messung des ersten Sensors (140), oder
∘ dem Wert des Differenzmaßes.

2. Verfahren nach Anspruch 1, umfassend ferner einen Schritt zum Vergleichen der Messung des ersten Sensors (140) mit dem Schwellenwert, wobei der Schritt zum Berechnen des Differenzmaßes wenigstens durchgeführt wird, wenn der Wert der Messung des erstens Sensors (140) den Schwellenwert überschreitet.

3. Verfahren nach einem der vorhergehenden Ansprüche, umfassend ferner Schritte zum:
- Definieren einer Menge von bekannten Positionen (P) auf der ersten Förderanlage (120),
- Verknüpfen einer entsprechenden Messung des ersten Sensors (140) und einer entsprechenden Messung des zweiten Sensors (141) mit jeder Position (P), wobei
- der Schritt zur Differenzmessung das Subtrahieren des Werts der vom zweiten Sensor (141) für eine gegebene Position (P) gespeicherten Messung von der vom ersten Sensor (140) für diese gleiche Position (P) gespeicherten Messung umfasst.

4. Verfahren nach einem der vorhergehenden Ansprüche, umfassend ferner
- einen Schritt zum Initialisieren, umfassend das Speichern des Werts der mit jeder Position (P) der leeren ersten Förderanlage (120) verknüpften Messung von wenigstens einem der Sensoren (140, 141) in einem Speicher,
- einen Schritt umfassend das Subtrahieren des Werts der Messung des Schritts zum Initialisieren:
∘ vom Wert der Messung des ersten Sensors (140), wenn die erste Förderanlage (120) beladen ist, oder
∘ vom Differenzmaß.

5. Verfahren nach einem der vorhergehenden Ansprüche, umfassend ferner einen Schritt zum Reinigen des Bandes der ersten Förderanlage (120).

6. Verfahren nach einem der vorhergehenden Ansprüche, wobei die Sortiervorrichtung (130) selektiv zwei Positionen einnehmen kann:
- eine erste Position, wenn die Messung durch den ersten Sensor (140) oder die Differenzmessung den Schwellenwert überschreitet; und
- eine zweite Position, wenn die Messung durch den ersten Sensor (140) oder die Differenzmessung den Schwellenwert unterschreitet; und
wobei das Verfahren ferner wenigstens einen der Schritte umfasst zum:
- Einnehmen der ersten Position im Vorgriff, wenn die Messung durch den ersten Sensor (140) oder die Differenzmessung den Schwellenwert überschreitet, und
- Einnehmen der Position mit Verzögerung, wenn die Messung durch den ersten Sensor (140) oder die Differenzmessung den Schwellenwert unterschreitet.

7. Verfahren nach einem der vorhergehenden Ansprüche, umfassend ferner einen Schritt zum Vorklassieren der kontaminierten Materialien (100) stromaufwärts von der Beschickung mit den Materialien auf der ersten Förderanlage (120).

8. Zum Ausführen des Verfahrens nach einem der vorhergehenden Ansprüche ausgebildete Vorrichtung zum Sortieren von kontaminierten Materialien (100), umfassend:
- eine im Wesentlichen horizontale erste Förderanlage (120),
- mechanische Mittel (150) zum Regeln der Höhe der kontaminierten Materialien (100) auf der ersten Förderanlage (120),
- einen wenigstens teilweise verkleideten ersten Sensor (140), dessen empfindliche Seite zur Oberseite (FSUP) der ersten Förderanlage (120) zeigt,
- einen wenigstens teilweise verkleideten zweiten Sensor (141), dessen empfindliche Seite zur Unterseite (FINF) der ersten Förderanlage (120) zeigt,
- eine zum Einnehmen von wenigstens zwei Positionen ausgebildete Schwerkraft-Sortiervorrichtung (130), und
- ein zum Regeln der Positionierung der Sortiervorrichtung (130) ausgebildetes Steuergerät gemäß dem Ergebnis des Vergleichs zwischen einem Schwellenwert und
∘ dem Wert einer Messung des ersten Sensors (140), oder
∘ dem Wert einer Differenzmessung umfassend das Subtrahieren des Werts einer Messung des zweiten Sensors (141) von dem einer Messung des ersten Sensors (140).

9. Vorrichtung nach Anspruch 8, ferner umfassend wenigstens eines der folgenden Elemente:
- eine zweite Förderanlage (121) in Reihe mit der ersten Förderanlage (120), auf die das kontaminierte Material durch Schwerkraft gelangt,
- eine Speicher- und Beschickungsvorrichtung (110), von der die kontaminierten Materialien (100) durch Schwerkraft zum Beschickungspunkt (A) der ersten Förderanlage (120) gelangen können.

10. Vorrichtung nach Anspruch 8 oder 9, wobei die erste Förderanlage (121) mit einem positiven Winkel zur Ebene der ersten Förderanlage (120) geneigt ist, um die kontaminierten Materialien (100) in Bezug auf die Höhe des Beschickungspunkts (A) anzuheben und wobei die Sortiervorrichtung (130) einen Pendeltrichter umfasst.

11. Vorrichtung zum Sortieren von kontaminierten Materialien (100) nach einem der Ansprüche 8 bis 10, **dadurch gekennzeichnet, dass** sie ferner wenigstens eines der folgenden Elemente umfasst:
- ein Gehäuse (1401), in dem der erste Sensor (140) eingesetzt ist, wobei das Gehäuse (1401) verkleidet ist und alle Seiten des ersten Sensors (140) mit Ausnahme der empfindlichen Fläche des ersten Sensors (140) schützt, wobei die empfindliche Fläche des ersten Sensors (140) durch ein vor potentiellen Schlägen und Verunreinigungen schützendes Schutzelement (1402) geschützt ist, wobei, wenn das Schutzelement (1402) eine Verkleidung ist, ihr Schwächungskoeffizient den der Verkleidung der anderen Seiten des ersten Sensors (140) unterschreitet;
- ein Gehäuse (1411), in dem der zweite Sensor (141) eingesetzt ist, wobei das Gehäuse (1411) verkleidet ist und alle Seiten des zweiten Sensors (141) mit Ausnahme der empfindlichen Fläche des zweiten Sensors (141) schützt, wobei die empfindliche Fläche des zweiten Sensors (141) durch ein vor potentiellen Schlägen und Verunreinigungen schützendes Schutzelement (1412) geschützt ist, wobei, wenn das Schutzelement (1412) eine Verkleidung ist, ihr Schwächungskoeffizient den der Verkleidung der anderen Seiten des zweiten Sensors (141) unterschreitet.

12. Vorrichtung zum Sortieren von kontaminierten Materialien (100) nach einem der Ansprüche 8 bis 11, **dadurch gekennzeichnet, dass** die erste Förderanlage (120) ebenfalls wenigstens eines der folgenden Elemente umfasst:
- eine zwischen der Oberseite (FSUP) und der Unterseite (FINF) der ersten Förderanlage (120) angeordnete erste Verkleidung (1201), die zur empfindlichen Seite des ersten Sensors (140) zeigt, und
- eine zwischen der Oberseite (FSUP) und der Unterseite (FINF) der ersten Förderanlage (120) angeordnete zweite Verkleidung, die zur empfindlichen Seite des zweiten Sensors (141) zeigt.

## Claims

1. Method for sorting contaminated material (100) in a continuous flow, comprising steps of:
- conveying contaminated material (100) from a supply point (A) to a sorting point (B) by means of a first conveyor (120),
- measuring the radioactive activity of the conveyed contaminated material using a first sensor (140) arranged between the supply point (A) and the sorting point (B), the sensing face of said sensor facing the upper face (FSUP) of the first conveyor (120), and
- sorting the contaminated material (100) at the sorting point (B) by means of a sorting device (130),
**characterized in that** it further comprises steps of:
- measuring the radioactive activity of the contaminated material using a second sensor (141) :
- either whose sensing face faces the upper face (FSUP) of the first conveyor (120) and is arranged upstream of the supply point (A),
- or whose sensing face faces the lower face (FINF) of the first conveyor (120),
- calculating a differential measurement, consisting in subtracting the value of a measurement from the second sensor (141) from that of a measurement from the first sensor (140), and
- slaving the sorting step to the result of the comparison between a threshold value and
• the value of the measurement from the first sensor (140), or
• the value of the differential measurement.

2. Method according to Claim 1, further comprising a step of comparing the measurement from the first sensor (140) with the threshold value, the step of calculating the differential measurement being implemented at least when the value of the measurement from the first sensor (140) exceeds the threshold value.

3. Method according to either one of the preceding claims, further comprising steps of:
- defining a set of known positions (P) on the first conveyor (120),
- associating with each position (P) a corresponding measurement from the first sensor (140) and a corresponding measurement from the second sensor (141), and in which
- the differential measurement step consists in subtracting the value of the measurement recorded by the second sensor (141) for a given position (P) from the value of the measurement recorded by the first sensor (140) for that same position (P).

4. Method according to any one of the preceding claims, further comprising
- a start-up step that consists in saving, in a memory, the value of the measurement from at least one of the sensors (140, 141), coupled with each position (P) of the first conveyor (120) when empty, and
- a step that consists in subtracting the value of the measurement of the start-up step:
• either from the value of the measurement from the first sensor (140) when the first conveyor (120) is loaded,
• or from the differential measurement.

5. Method according to any one of the preceding claims, further comprising a step consisting in cleaning the belt of the first conveyor (120).

6. Method according to any one of the preceding claims, in which the sorting device (130) can selectively adopt two positions:
- a first position when the measurement by the first sensor (140), or the differential measurement, is greater than the threshold value; and
- a second position when the measurement by the first sensor (140), or the differential measurement, is less than the threshold value,
the method further comprising at least one of the steps of:
- adopting the first position in anticipation when the measurement by the first sensor (140), or the differential measurement, exceeds the threshold value, and
- adopting the second position with delay when the measurement by the first sensor (140), or the differential measurement, drops below the threshold value.

7. Method according to any one of the preceding claims, further comprising a step of pre-crushing the contaminated material (100) upstream of the point at which said material is loaded onto the first conveyor (120).

8. Device for sorting contaminated material (100), able to implement the method according to any one of the preceding claims, and comprising:
- a first, essentially horizontal conveyor (120),
- mechanical means (150) for adjusting the height of the contaminated material (100) on the first conveyor (120),
- a first sensor (140) which is at least partially armoured and of which the sensing face faces the upper face (FSUP) of the first conveyor (120),
- a second sensor (141) which is at least partially armoured and of which the sensing face faces the lower face (FINF) of the first conveyor (120),
- a gravitational sorting device (130) that can selectively adopt at least two positions, and
- a computer that is configured to slave the position of the sorting device (130) to the result of the comparison between a threshold value and
• the value of a measurement from the first sensor (140), or
• the value of a differential measurement consisting in subtracting the value of a measurement from the second sensor (141) from that of a measurement from the first sensor (140).

9. Device according to Claim 8, further comprising at least one of the following elements:
- a second conveyor (121), in series with the first conveyor (120), onto which the contaminated material drops by gravity,
- a storage and supply device (110) whence the contaminated material (100) can be emptied by gravity at the supply point (A) of the first conveyor (120).

10. Device according to either one of Claims 8 and 9, in which the second conveyor (121) is inclined by a positive angle with respect to the plane of the first conveyor (120), in order to raise the contaminated material (100) above the height of the supply point (A), and in which the sorting device (130) comprises a suspended hopper.

11. Device for sorting contaminated material (100) according to any one of Claims 8 to 10, **characterized in that** it further comprises at least one of the following elements:
- a casing (1401) into which is inserted the first sensor (140), said casing (1401) being armoured and protecting all of the faces of said first sensor (140) with the exception of the sensing surface of said first sensor (140), said sensing surface of said first sensor (140) being protected by a protective element (1402) that protects from possible impacts and from dirt, in which, if said protective element (1402) is armour, then its coefficient of attenuation is less than that of the armour of the other faces of said first sensor (140);
- a casing (1411) into which is inserted the second sensor (141), said casing (1411) being armoured and protecting all of the faces of said second sensor (141) with the exception of the sensing surface of said second sensor (141), said sensing surface of said second sensor (141) being protected by a protective element (1412) that protects from possible impacts and from dirt, in which, if said protective element (1412) is armour, then its coefficient of attenuation is less than that of the armour of the other faces of said second sensor (141).

12. Device for sorting contaminated material (100) according to any one of Claims 8 to 11, **characterized in that** the first conveyor (120) also comprises at least one of the following elements:
- first armour (1201) arranged between the upper face (FSUP) and the lower face (FINF) of said first conveyor (120) and facing the sensing surface of the first sensor (140), and
- second armour arranged between the upper face (FSUP) and the lower face (FINF) of said first conveyor (120) and facing the sensing surface of the second sensor (141).
